# EUROPÄISCHE PATENTSCHRIFT

(11) **EP 0 785 224 B1**
(45) Veröffentlichungstag und Bekanntmachung des Hinweises auf die Patenterteilung: **09.04.2003**
(21) Anmeldenummer: 97100322.3
(22) Anmeldetag: 10.01.1997
(51) Int. Cl.: C08J 3/075, C08L 101/14, C08J 11/06

(54) **Verfahren zur Herstellung hydrophiler, hochquellfähiger Hydrogele**
Process for preparing hydrophilic hydrogels with high swelling capacity
Procédé pour la préparation d'hydrogels hydrophyliques à haute capacité de gonflage

(30) Priorität: 19.01.1996 DE 19601764
(43) Veröffentlichungstag der Anmeldung: 23.07.1997
(73) Patentinhaber: BASF AKTIENGESELLSCHAFT, 67056 Ludwigshafen (DE)
(72) Erfinder: Engelhardt, Fritz, Dr., Chesapeake, Virginia 23320 (US); Daniel, Thomas, Dr., Chesapeake, VA 23321 (US); Herfert, Norbert, Dr., 63674 Altenstadt (DE); Remmel, Gustav, 63571 Gelnhausen (DE); Riegel, Ulrich, 60386 Frankfurt am Main (DE); Stüven, Uwe, Dr.-Ing., 65812 Bad Soden (DE)

(56) Entgegenhaltungen:
- EP-A- 0 063 331
- EP-A- 0 463 388
- US-A- 4 950 692

## Beschreibung

Die vorliegende Erfindung betrifft ein Verfahren zur Herstellung hydrophiler, hochquellfähiger Hydrogele durch Einmischen von Feinkorn in hydrophiles, hochquellfähiges Hydrogel in wäßriger Gelform.

Hydrophile, hochquellfähige Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vemetzte Cellulose- oder Stärkeether oder in wäßrigen Flüssigkeiten quellbare Naturprodukte, wie beispielsweise Guarderivate.
Synthetische Produkte dieser Art können durch bekannte Polymerisationsverfahren aus geeigneten hydrophilen Monomeren, beispielsweise Acrylsäure, hergestellt werden. Bevorzugt ist die Polymerisation in wäßriger Lösung nach dem Verfahren der sogenannten Gelpolymerisation. Dabei entstehen Polymerisate in Form wäßriger Gallerten, die nach mechanischer Zerkleinerung mit geeigneten Apparaten durch bekannte Trocknungsverfahren in fester Form erhalten werden.
Bei der Mahlung dieser in fester Form erhaltenen superabsorbierenden Polymere entstehen zwangsläufig Anteile feiner Partikel, die aufgrund ihrer geringen Größe, z. B. in Windeln, Inkontinenzartikeln und Damenbinden, nicht verwendet werden können, da sie zu Dosierschwierigkeiten und Staubentwicklung führen sowie eine reduzierte Quellkapazität haben. Feinanteile in wasserquellbaren Polymerartikeln führen zu Produkten mit verringerter Quellkapazität, verursacht durch das sogenannte Gel-Blocking. Gel-Blocking beschreibt eine scheinbare Reduktion des Absorptionsvermögens für wäßrige Flüssigkeiten, bedingt durch die Bildung eines fließenden Gels, welches noch nicht angequollene superabsorbierende Polymerpartikel umgibt oder einschließt, so daß der Flüssigkeitstransport an die Oberfläche dieser noch nicht angequollenen Partikel unterbunden wird. Aus den sogenannten Gründen werden polymere Feinanteile kleiner 0,100 mm, bevorzugt kleiner 0,150 mm, vor ihrem Einsatz in Hygieneartikeln abgetrennt, z. B. durch Siebung. Je nach Lage des Siebschnittes fallen bis zu 25 % wasserquellbare Feinanteile an, die bisher nur in sehr begrenztem Maße speziellen Anwendungen zugeführt werden können.
Da die wasserquellbaren polymeren Feinanteile einen erheblichen Wert darstellen, hat es nicht an Versuchen gefehlt, sie in eine wiederverwertbare Form zu überführen.
So beschreibt die DE-A 37 41 157 eine Agglomeration durch Aufbau von Granulaten durch thermische Behandlung einer Mischung wasserquellbarer, polymerer Feinpartikel mit schmelz- bzw. sinterbaren pulverförmigen Feststoffen.
In der DE-A 37 41 158 wird ein Verfahren zur Agglomeration von wasserquellbaren polymeren Feinanteilen beschrieben, das dadurch gekennzeichnet ist, daß Lösungen oder Dispersionen zum Aufbau von Agglomeraten eingesetzt werden. Der Nachteil agglomerierter Feinanteile ist allerdings ihre geringe Stabilität bei mechanischer Belastung, wie sie beispielsweise beim Transport und bei der Verarbeitung auftritt.
Die WO92/01008 beschreibt ein Verfahren zur Herstellung wasserquellbarer Produkte unter Verwendung von Feinstanteilen wasserquellbarer Polymerer, gekennzeichnet dadurch, daß die wasserquellbaren polymeren Feinstanteile in einem bei Raumtemperatur flüssigen Monomeren dispergiert werden und daß diese Dispersion mit einer wäßrigen Monomerlösung vermischt, polymerisiert, zerkleinert und getrocknet wird.
In der EP-A 513 780 wird ein Verfahren zum Recyclen von trockenem, wäßrige Lösungen absorbierendem Polymerfeinkorn beschrieben, bei dem das Feinkorn mit einer zu polymerisierenden Monomerlösung gemischt und anschließend polymerisiert wird.
Allerdings wird durch die Zugabe von Feinkorn in die zu polymerisierende Monomerlösung die Feststoffkonzentration der Monomerlösung erhöht und der Anteil an Übertragungsreaktionen der wachsenden radikalischen Polymerketten auf bereits gebildetes bzw. vorliegendes Polymer nimmt zu. Dadurch bedingt werden stärker vernetzte Produkte erhalten, die ein entsprechend niedriges Absorptions-vermögen für wäßrige Flüssigkeiten aufweisen.
In der EP-A 463 388 wird die Umwandlung von superabsorbierendem Feinkorn in größere Partikel beschrieben, wobei die superabsorbierenden Feinkorn-Partikel unter Zusatz von Wasser in das bei der Polymerisation der wäßrigen Monomerlösung erhältliche Gel eingemischt und diese Mischung anschließend getrocknet wird. Die in diesem Dokument beschriebene Einmischung von superabsorbierenden Feinkorn-Partikeln in das bei der Polymerisation der wäßrigen Monomerlösung erhältliche Gel ist verfahrenstechnisch aufwendig, da eine homogene Verteilung des Feinkorns durch das eingangs beschriebene Blocken behindert wird und nichtbenetzte, trockene Feinkorn-Partikel von dem Polymergel eingeschlossen werden können. Weiterhin benötigt dieses Verfahren zur Einmischung des Feinkorns in das Polymergel große Mengen an Wasser, nämlich 4 bis 7 Teile Wasser pro Teil einzumischendes Feinkorn, das durch Trocknung wieder entfernt werden muß.

Aufgabe vorliegender Erfindung ist es somit, superabsorbierende Feinkornpartikel in eine (wieder)verwertbare Form zu überführen, wobei die mit den Verfahren des Standes der Technik verbundenen Nachteile nicht auftreten sollen.

Die vorliegende Erfindung betrifft somit ein Verfahren zur Herstellung hydrophiler, hochquellfähiger Hydrogele durch Einmischen von Feinpartikeln eines hydrophilen, hochquellfähigen Hydrogels in ein hydrophiles, hochquellfähiges Hydrogel in wäßriger Gelform unter Zugabe von Wasser, dadurch gekennzeichnet, daß das Einmischen in Gegenwart eines Tensides erfolgt.

Unter Feinpartikeln eines hydrophilen, hochquellfähigen Hydrogels werden bevorzugt Teilchen mit einer Teilchengröße von kleiner 0,1 mm, besonders bevorzugt von kleiner 0,15 mm verstanden. Solche Teilchen fallen insbesondere wie oben beschrieben bei der Siebung von getrockneten und gemahlenen hydrophilen, hochquellfähigen Polymeren an.
Unter einem hydrophilen, hochquellfähigen Hydrogel in wäßriger Gelform wird bevorzugt ein Produkt verstanden, das direkt durch Gelpolymerisation geeigneter hydrophiler Monomerer erhalten wird und das üblicherweise zur weiteren Verwendung getrocknet, gemahlen und abgesiebt wird.
Es können aber auch auf andere Weise erhaltene Hydrogele beispielsweise durch Zugabe von Wasser in eine entsprechende wäßrige Gelform überführt werden.

Das genannte Hydrogel in wäßriger Gelform weist bevorzugt einen Feststoffgehalt von 15 bis 50 Gew.-%, besonders bevorzugt von 15 bis 30 Gew.-%, auf. Allerdings sind auch Feststoffgehalte von mehr als 50 Gew.-% möglich.
Bevorzugt handelt es sich bei den erfindungsgemäß einzusetzenden Feinkornpartikeln um ein Produkt, das bei der oben beschriebenen Absiebung eines durch Gelpolymerisation geeigneter hydrophiler Monomere erhaltenen Polymeres und anschließender Trocknung und Mahlung erhalten wurde. Somit weisen erfindungsgemäß einzusetzende Feinkornpartikel und Hydrogel in wäßriger Gelform bevorzugt die gleiche chemische Zusammensetzung auf.

Gemäß vorliegender Erfindung werden bevorzugt zu 100 Teilen des durch Gelpolymerisation erhaltenen hydrophilen, hochquellfähigen Hydrogels in wäßriger Gelform 2 bis 10 Teile, besonders bevorzugt 5 bis 8 Teile Feinkornpartikel, 0,2 bis 10 Teile, besonders bevorzugt 1 bis 4 Teile Wasser und 0,01 bis 0,2 Teile, besonders bevorzugt 0,015 bis 0,15 Teile Tensid zugemischt.
Das Einmischen der Feinkornpartikel, des Wassers und des Tensids in das hydrophile, hochquellfähige Hydrogel in wäßriger Gelform kann auf verschiedene Weisen erfolgen. Bevorzugt ist, das wäßrige Gel in einem Fleischwolf mechanisch zu zerkleinern und dazu Feinkornpartikel, Wasser und Tensid zuzugeben und durch erneutes Wolfen in einem Fleischwolf homogen einzumischen. Die Zugabe von Feinkornpartikel, Wasser und Tensid kann dabei in verschiedenen Reihenfolgen erfolgen. So können zunächst die Feinkornpartikel in dem wäßrigen Gel verteilt und anschließend das Tensid zusammen mit dem Wasser in Form einer Lösung oder Dispersion zugegeben werden. Die Zugabe der Feinkornpartikel und der Mischung aus Tensid und Wasser kann aber auch gleichzeitig erfolgen. Eine weitere Möglichkeit ist, zunächst die Feinkornpartikel mit der Mischung aus Tensid und Wasser anzuteigen und diese angeteigte Mischung dem wäßrigen Gel zuzussetzen. In einer besonders bevorzugten Verfahrensweise werden die Feinkornpartikel mit einem Teil der Mischung aus Tensid und Wasser angeteigt und dem wäßrigen Gel zugesetzt. Die homogene Einmischung dieser angeteigten Feinkornpartikel wird durch die gleichzeitige oder danach erfolgende Zugabe des restlichen Teils der Mischung aus Tensid und Wasser zu dem wäßrigen Gel erleichtert. Bevorzugt werden 40 bis 60% der Mischung aus Tensid und Wasser zum Anteigen der Feinkornpartikel benutzt und 60 bis 40 % der Mischung aus Tensid und Wasser werden direkt dem wäßrigen Gel zugesetzt.
Nach der Zumischung von Feinkornpartikeln in Gegenwart von Wasser und Tensid kann das Produkt in an sich bekannter Weise getrocknet, gemahlen und gegebenenfalls abgesiebt werden.

Erfindungsgemäß können alle nichtionischen, anionischen, kationischen oder amphoteren Tenside verwendet werden, wobei solche bevorzugt sind, die in Wasser löslich oder zumindest dispergierbar sind. Der HLB-Wert der Tenside ist somit bevorzugt größer gleich drei (Definition des HLB-Wertes: siehe W.C. Griffin, J. Soc. Cosmetic Chem. 5 (1954) 249).
Geeignete nichtionische Tenside sind beispielsweise die Anlagerungsprodukte von Ethylenoxid, Propylenoxid oder Mischungen aus Ethylenoxid und Propylenoxid an Alkylphenole, aliphatische Alkohole, Carbonsäuren oder Amine. Beispielsweise eignen sich mit Ethylenoxid und/oder Propylenoxid alkoxylierte (C₈-C₂₄)-Alkylphenole. Handelsübliche Produkte dieser Art sind beispielsweise Octylphenole bzw. Nonylphenole, die jeweils mit 4 bis 20 Mol Ethylenoxid pro Mol Phenol umgesetzt sind. Andere geeignete nichtionische Tenside sind ethoxylierte (C₁₀-C₂₄)-Fettalkohole, ethoxylierte (C₁₀-C₂₄)-Fettsäuren sowie ethoxylierte (C₁₀-C₂₄)-Fettamine und ethoxylierte (C₁₀-C₂₄) -Fettsäureamide. Außerdem eignen sich partiell mit (C₁₀-C₂₄)-Fettsäuren veresterte mehrwertige (C₃-C₆)-Alkohole. Diese Ester können zusätzlich mit 2 bis 20 Mol Ethylenoxid umgesetzt sein. Als Fettalkohole, die zur Herstellung der Tenside alkoxyliert werden, eignen sich beispielsweise Palmitylalkohol, Stearylalkohol, Myristylalkohol, Laurylalkohol, Oxoalkohole sowie ungesättigte Alkohole, wie Oleylalkohol. Die Fettalkohole werden dabei zu einem solchen Grad ethoxyliert bzw. propoxyliert oder mit Ethylenoxid und Propylenoxid umgesetzt, daß die Reaktionsprodukte in Wasser löslich sind. Im allgemeinen setzt man 1 Mol der oben angegebenen Fettalkohole mit 2 bis 20 Mol Ethylenoxid und gegebenenfalls bis zu 5 Mol Propylenoxid so um, daß man Tenside erhält, die einen HLB-Wert von mehr als 8 haben.
(C₃-C₆)-Alkohole, die partiell verestert und gegebenenfalls ethoxyliert werden, sind beispielsweise Glycerin, Sorbit, Mannit und Pentaerythrit. Diese mehrwertigen Alkohole werden mit (C₁₀-C₂₄)-Fettsäuren, z. B. Ölsäure, Stearinsäure oder Palmitinsäure, partiell verestert. Die Veresterung mit den Fettsäuren erfolgt dabei höchstens bis zu einem solchen Grad, daß noch mindestens eine OH-Gruppe des mehrwertigen Alkohols unverestert bleibt. Geeignete Veresterungsprodukte sind beispielsweise Sorbitanmonooleat, Sorbitantristearat, Mannitmonooleat, Glycerinmonooleat und Glycerindioleat. Die genannten Fettsäureester mehrwertiger Alkohole, die noch mindestens eine freie OH-Gruppe enthalten, können zur Modifizierung noch mit Ethylenoxid, Propylenoxid oder Mischungen aus Ethylenoxid und Propylenoxid umgesetzt werden. Pro Mol Fettsäureester verwendet man vorzugsweise 2 bis 20 Mol der genannten Alkylenoxide. Der Ethoxylierungsgrad hat bekanntlich einen Einfluß auf den HLB-Wert der nichtionischen Tenside. Durch geeignete Wahl der Alkoxylierungsmittel und der Menge an Alkoxylierungsmittel kann man Tenside mit HLB-Werten in dem Bereich von 3 bis 20 in technisch einfacher Weise herstellen.
Eine weitere Gruppe geeigneter Tenside sind Homopolymere des Ethylenoxids, Blockcopolymere von Ethylenoxid und Alkylenoxiden, vorzugsweise Propylenoxid sowie polyfunktionelle Blockcopolymere, die beispielsweise durch sequentielle Addition von Propylenoxid und Ethylenoxid an Diamine gebildet werden. Desweiteren geeignet sind Alkylpolyglykoside, wie sie beispielsweise unter den Warenzeichen ®APG, ®Glucopan und ®Plantaren vermarktet werden.
Die nichtionischen Tenside können entweder allein oder auch in Mischung miteinander verwendet werden.

Geeignete anionische Tenside sind (C₈-C₂₄)-Alkylsulfonate, die vorzugsweise in Form der Alkalisalze eingesetzt werden, (C₈-C₂₄)-Alkylsulfate, die vorzugsweise in Form der Alkali- oder Trialkanolammoniumsalze eingesetzt werden, wie z. B. Triethanol-ammoniumlaurylsulfat, Sulfobernsteinsäurediester, z. B. das Natriumsalz von Sulfobernsteinsäuredi-(2-ethylhexyl)ester, Sulfobernsteinsäure-halbester, wie beispielsweise Natriumlaurylsulfosuccinat oder Dinatriumfettalkoholpolyglykolethersulfosuccinat, (C₈-C₂₄)-Alkylarylsulfonsäuren sowie die Schwefelsäurehalbester von Anlagerungsprodukten von Ethylenoxid an Alkylphenole oder Fettalkohole.

Beispiele für geeignete kationische Tenside sind die Salze von Fettaminen, z. B. Kokosfettammoniummacetat, quarternäre Fettsäureaminoester, z. B. Difettsäureisopropylesterdimethylammoniummethosulfat, quarternäre Fettsäureaminoamide, z. B. N-Undecylensäurepropylamido-N-trimethyl-ammoniummethosulfat, Anlagerungsprodukte von Alkylenoxiden an Fettamine bzw. Salze von Fettaminen, wie z. B. Pentaoxethylstearylammoniumacetat oder ethoxyliertes Methyl-oleinamin-Methosulfat sowie langkettige Alkylbenzyldimethylammoniumverbindungen, wie (C₁₀-C₂₂)-Alkyl-benzyldimethylammoniumchlorid.

Beispiele für geeignete amphotere Tenside sind insbesondere Verbindungen, die im gleichen Molekül mindestens ein quarternäres Ammoniumkation und mindestens ein Carboxylat- oder Sulfatanion tragen, wie beispielsweise Dimethylcarboxymethyl-Fettsäurealkylamidoammoniumbetaine oder 3-(3-Fettsäure-amido-propyl)dimethylammonium-2-hydroxypropansulfonate.

Die ionischen Tenside können allein oder auch in Mischung miteinander verwendet werden.

Geeignete hydrophile, hochquellfähige Hydrogele, die erfindungsgemäß hergestellt werden können, sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate. Diese Hydrogele sind dem Fachmann bekannt.
Zur Herstellung dieser hydrophilen, hochquellfähigen Polymeren geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich dessen Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide. Desweiteren wasserlösliche N-Vinylamide oder auch Diallyldimethyl-ammoniumchlorid.
Bevorzugte hydrophile Monomere sind Verbindungen der allgemeinen Formel I 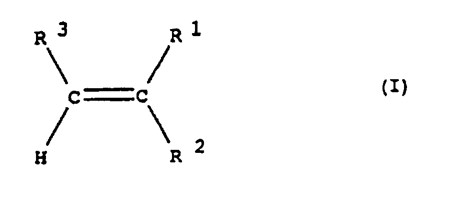 worin
R¹ Wasserstoff, Methyl oder Ethyl,
R² die Gruppe -COOR⁴, die Sulfonylgruppe, die Phosphonylgruppe, die mit (C₁-C₄)-Alkanol veresterte Phosphonylgruppe oder eine Gruppe der Formel 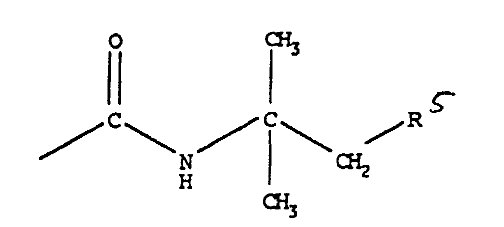
R³ Wasserstoff, Methyl, Ethyl oder die Carboxylgruppe,
R⁴ Wasserstoff, Amino oder Hydroxy-(C₁-C₄)-Alkyl und
R⁵ die Sulfonylgruppe, die Phosphonylgruppe oder die Carboxylgruppe bedeuten.

Beispiele für (C₁-C₄)-Alkanole sind Methanol, Ethanol, n-Propanol oder n-Butanol.

Besonders bevorzugte hydrophile Monomere sind Acrylsäure und Methacrylsäure.

Hydrophile Hydrogele, die durch Polymerisation olefinisch ungesättigter Verbindungen erhalten werden können, sind bereits bekannt und beispielsweise beschrieben in US 4,057,521, US 4,062,817, US 4,525,527, US 4,286,082, US 4,340,706 und US 4,295,987.

Auch hydrophile Hydrogele, die durch Pfropfcopolymerisation olefinisch ungesättigter Säuren auf unterschiedliche Matrices, wie beispielsweise Polysaccharide, Polyalkylenoxide sowie deren Derivate, zugänglich sind, sind bereits bekannt und beispielsweise in der US 5,011,892, US 4,076,663 oder US 4,931,497 beschrieben.

Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.
Geeignete Polyalkylenoxide haben beispielsweise die Formel 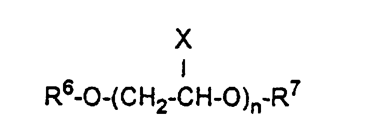 worin
R⁶ und R⁷ unabhängiger voneinander Wasserstoff, Alkyl, Alkenyl oder Aryl,
X Wasserstoff oder Methyl und
n eine ganze Zahl von 1 bis 10 000 bedeuten.
R⁶ und R⁷ bedeuten bevorzugt Wasserstoff, (C₁-C₄)-Alkyl, (C₂-C₆)-Alkenyl oder Phenyl.
Bevorzugte Hydrogele sind insbesondere Polyacrylate, Polymethacrylate sowie die in US 4,931,497, US 5,011,892 und US 5,041,496 beschriebene Pfropfpolymere. Der Inhalt dieser Patentschriften ist ausdrücklich auch Bestandteil vorliegender Offenbarung.

Die hydrophilen, hochquellfähigen Hydrogele sind bevorzugt vernetzt, d. h. sie enthalten Verbindungen mit mindestens zwei Doppelbindungen, die in das Polymernetzwerk einpolymerisiert sind.
Geeignete Vemetzer sind insbesondere Methylenbisacryl- bzw. -methacrylamid, Ester ungesättigter Mono- oder Polycarbonsäuren von Polyolen, wie Diacrylat oder Triacrylat, z. B. Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in der EP-A 343 427 beschrieben sind. Der Inhalt der EP-A 343427 ist ausdrücklich auch Bestandteil der vorliegenden Offenbarung.

Darüber hinaus sind die hydrophilen, hochquellfähigen Hydrogele besonders bevorzugt in an sich bekannter Weise in wäßriger Gelphase nachvernetzt.

Die hydrophilen, hochquellfähigen Hydrogele können durch an sich bekannte Polymerisationsverfahren hergestellt werden. Bevorzugt ist die Polymerisation in wäßriger Lösung nach dem Verfahren der sogenannten Gelpolymerisation. Dabei werden 15 bis 50 Gew.%ige wäßrige Lösungen eines oder mehrerer hydrophiler Monomerer und gegebenenfalls einer geeigneten Pfropfgrundlage in Gegenwart eines Radikalinitiators bevorzugt ohne mechanische Durchmischung unter Ausnutzung des Trommsdorff-Norrish-Effektes (Bios Final Rep. 363.22; Makromol. Chem. 1, 169 (1947)), polymerisiert.
Die Polymerisationsreaktion kann im Temperaturbereich zwischen 0 °C und 150 °C, vorzugsweise zwischen 10 °C und 100 °C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.
Zur Auslösung der Polymerisation können energiereiche elektromagnetische Strahlen oder die üblichen chemischen Polymerisationsinitiatoren herangezogen werden, z. B. organische Peroxide, wie Benzoylperoxid, tert. Butylhydroperoxid, Methylethyl-ketonperoxid, Cumolhydroperoxid, Azoverbindungen wie Azodiisobutyronitril sowie anorganische Peroxiverbindungen wie (NH₄)₂S₂O₈ oder K₂S₂O₈ oder H₂O₂ gegebenenfalls in Kombination mit Reduktionsmitteln wie Natriumhydrogensulfit, und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie z. B. Mannichaddukte aus Sulfinsäure, Aldehyden und Aminoverbindungen, wie sie in der DE-C 1 301 566 beschrieben sind.
Durch mehrstündiges Nachheizen der Polymerisatgele im Temperaturbereich 50 bis 130°C, vorzugsweise 70 bis 100 °C, können die Qualitätseigenschaften der Polymerisate noch verbessert werden.

Der erfindungsgemäße Zusatz von Tensid verringert wirkungsvoll die Neigung der Feinkompartikel zu Gel-Blocking und ermöglicht somit deren bessere homogene Einmischung in das hydrophile, hochquellfähige Hydrogel in wäßriger Gelform unter Einsatz bedeutend geringerer Wassermengen als gemäß Stand der Technik. Werden die Feinkornpartikel nicht homogen in das wäßrige Gel eingemischt, so bilden sich unter dem Zusatz von Wasser harte, feste Agglomerate von Feinkornpartikeln, die zu mechanischen Problemen in den Anlagenteilen führen und die aufgrund ihrer Größe durch eine Siebung nicht entfernt werden können, aber trotzdem die Erscheinung des Gel-Blockings bei der Absorption von wäßrigen Flüssigkeiten zeigen. Der Anteil solcher harter, fester Agglomerate von Feinkornpartikeln im Endprodukt muß daher minimiert werden, um die gewünschte schnelle Aufnahme von wäßrigen Flüssigkeiten zu erhalten. Die Geschwindigkeit der Flüssigkeitsaufnahme von superabsorbierenden Polymer-Partikeln kann durch den Vortex-Test ermittelt werden:
Hierzu werden 50 ml einer 0,9 Gew.-%igen wäßrigen NaCI-Lösung in ein 100 ml-Becherglas gegeben und diese Lösung mit Hilfe eine Magnetrührers und eines Rührstäbchens bei 600 Upm gerührt. In den Rand der sich hierbei ausbildenden Rührtraube werden schnell 2 g des zu untersuchenden superabsorbierenden Polymers gegeben und die Zeit gestoppt, die benötigt wird, um die Rührtraube durch vollständige Vergelung zum Verschwinden zu bringen. Diese Zeit ist umso kürzer, je geringer der Anteil an Partikeln der untersuchten Gesamtprobe ist, die die Erscheinung des Gel-Blocking zeigen.

Die erfindungsgemäß hergestellten hydrophilen, hochquellfähigen Hydrogele sind in hervorragender Weise als Absorptionsmittel für Wasser und wäßrige Flüssigkeiten, wie Urin oder Blut, in Hygieneartikeln wie Baby- und Erwachsenenwindeln, Binden, Tampons und dergleichen geeignet. Sie können aber auch als Bodenverbesserungsmittel in Landwirtschaft und Gartenbau, als Feuchtigkeitsbindemittel bei der Kabelummantelung sowie zum Eindicken wäßriger Abfälle verwendet werden.

Die Erfindung wird durch die nachfolgenden Beispiele erläutert:

### Vergleichsbeispiel I

10 Teile superabsorbierende Feinkorn-Partikel werden mit 2 Teilen Wasser vermengt. Dabei agglomieren die Feinkorn-Partikel zu einem einzigen Klumpen mit gummiähnlicher Konsistenz. Eine homogene Einmischung dieses Agglomerats in Polymerisatgel ist auch unter Zusatz beliebig großer Mengen Wasser nicht möglich.

### Beispiel I

10 Teile superabsorbierende Feinkorn-Partikel werden mit 2 Teilen Wasser, dem vorher die in Tabelle I angegebenen Teile an Tensid zugesetzt worden sind, vermengt. Dabei wird in allen Fällen ein angefeuchtetes, immer noch frei fließfähiges Pulver erhalten. Dieses Pulver läßt sich problemlos in 200 Teile Polymerisatgel mit einem Feststoffgehalt von 25 Gew.-% einmischen und verteilen, wobei dieser Prozeß durch eine anschließende Zugabe von 2 Teilen Wasser zu dieser Mischung noch unterstützt wird.

**Tabelle I**

| **Versuch** | **Tensid, welches dem Wasser zugesetzt wurde** | **Teile Tensid** |
|---|---|---|
| 1 - 1 | Genagen® CA-050 | 0,12 |
| 1 - 2 | Tween® 80 | 0,08 |
| 1 - 3 | SPAN® 20 | 0,06 |
| 1 - 4 | Plantaren ®2 000 UPNP | 0,05 |
| 1 - 5 | Hostapur ®SAS 30 | 0,03 |
| 1 - 6 | C₁₂-/C₁₄-Alkylbenzyldimethylammoniumchlorid | 0,18 |
| 1 - 7 | Ampholyt®JB 130/K | 0,25 |
| 1 - 8 | DSIE-Addukt | 0,30 |
| Genagen® CA-050 (Handelsprodukt der Hoechst AG) ist ein Kokosfettsäure-monoethanolamidpolyglykolether | | |
| Tween® 80 (Handelsprodukt der ICI) ist Polyethylenoxid-(20)-Sorbitanmonooleat | | |
| SPAN® 20 (Handelsprodukt der ICI) ist Sorbitanmonolaurat | | |
| Plantaren® 2 000 UPNP (Handelsprodukt der Henkel KgaA) ist ein Alkylpolyglykosid | | |
| Hostapur® SAS 30 (Handelsprodukt der Hoechst AG) ist ein durch Sulfoxidation von n-Paraffinen hergestellte Mischung von n-Alkansulfonaten DSIE-Addukt ist das Umsetzungsprodukt von Distearylimidazolinester mit Milchsäure | | |
| Ampholyt® JB 130/K (Handelsprodukt der Hüls AG) ist ein Cocoamidopropyl-Betain | | |

### Vergleichsbeispiel II

800 Teile Acrylsäure werden mit 800 Teilen Wasser verdünnt und unter Eiskühlung mit 644,38 Teilen einer 25 Gew.-%igen Natronlauge umgesetzt. Diese Reaktionsmischung wird zusammen mit 2 Teilen Methylenbisacrylamid und 1 916,22 Teilen Wasser in einen ungeheizten und isolierten Reaktor gegeben. Durch die Lösung wird Stickstoff geblasen und die Temperatur der Lösung wird auf 10 °C abgesenkt. Nachdem der in der Lösung gelöste Sauerstoff unterhalb 1 ppm lag, wurden die folgenden Initiatoren in der angegebenen Reihenfolge zugegeben:
0,8 Teile 2,2-Azobisamidinopropandihydrochlorid in 10 Teilen Wasser
0,008 Teile Ascorbinsäure
0,23 Teile einer 35 Gew.-%igen wäßrigen Wasserstoffperoxid-Lösung.

Nach einer Induktionsphase von 20 Minuten startete die Polymerisation und eine maximale Temperatur von 60 °C wurde innerhalb von 2 Stunden erreicht. Das so erhaltene Gel wurde noch 2 Stunden lang in dem isolierten Reaktor belassen, wodurch der Restmonomergehalt an Acrylsäure im Gel auf unter 1 000 ppm reduziert wurde.
Nachdem das Polymerisatgel in einem Fleischwolf zerkleinert worden ist, wurden zu dem Gel 644,38 Teile einer 25 Gew.-%igen Natronlauge gegeben. Vor der Zugabe der Natronlauge betrug die Temperatur des Gels ungefähr 60 °C und die Temperatur der Natronlauge war 38 °C. Das Gel wurde erneut durch den Fleischwolf gegeben, um eine gute Vermischung des Gels mit der Natronlauge und somit eine homogene Neutralisation des Gels zu erreichen. Zu diesem Gel, das durch die exotherme Neutralisationsreaktion nun eine Temperatur von 75 - 80 °C aufwies, wurden gleichzeitig 230 Teile superabsorbierende Feinkorn-Partikel und 1 000 Teile Wasser gegeben. Das Gel wurde daraufhin erneut dreimal durch den Fleischwolf gegeben, um die Feinkorn-Partikel möglichst homogen in dem Gel zu verteilen. Dennoch sind in dem Gel immer noch kleinere, sehr feste Agglomerate von Feinkorn-Partikeln zu erkennen. Das so mechanisch zerkleinerte Gel wurde mit Heißluft bei 150 °C getrocknet. Das Polymer wird anschließlich gemahlen und auf ein Kornspektrum von 0,150 - 0,800 mm abgesiebt.

Das wasserabsorbierende Polymer weist folgende Eigenschaften auf:

| | |
|---|---|
| Retention | 45 g/g |
| Vortex-Zeit | 38 s |

### Beispiel II

Es wurde analog zu Vergleichsbeispiel II vorgegangen, jedoch wurden nach der vollständigen Neutralisation dem Polymerisatgel 230 Teile superabsorbierende Feinkorn-Partikel und gleichzeitig 40 Teile Tensid-haltiges Wasser zugesetzt. Art und Menge der eingesetzten Tenside können der Tabelle II entnommen werden.

Nach dem anschließenden dreimaligen Durchwolfen des Geles sind im Gegensatz zu Vergleichsbeispiel II keine Feinkorn-Agglomerate im Gel zu erkennen. Das so mechanisch zerkleinerte Gel wurde mit Heißluft bei 150 °C getrocknet. Das Polymer wird anschließlich gemahlen und auf ein Kornspektrum von 0,150 - 0,800 mm abgesiebt.

**Tabelle II**

| **Versuch** | **Tensid** | **Teile** | **Retention** | **Vortex-Zeit** |
|---|---|---|---|---|
| 2 - 1 | Tween® 21 | 2,3 | 47 g/g | 31 s |
| 2 - 2 | Genapol® 2822 | 4,6 | 46 g/g | 33 s |
| 2 - 3 | Hostapur® SAS 30 | 0,9 | 47 g/g | 32 s |
| 2 - 4 | Natriumlaurylsulfat | 1,4 | 48 g/g | 30 s |
| 2 - 5 | C₁₂-/C₁₄-Alkylbenzyldimethylammoniumchlorid | 6,0 | 47 g/g | 35 s |
| 2 - 6 | Ampholyt® JB 130/K | 5,1 | 46 g/g | 36 s |
| Tween® 21 (Handelsprodukt der ICI) ist Polyethylenoxid-(4)-Sorbitanmonolaurat Genapol® 2822 (Handelsprodukt der Hoechst AG) ist ein nichtionisches Fettalkohol-Ethylenoxid-Propylenoxid-Addukt | | | | |

Alle in dieser Versuchsserie hergestellten Produkte weisen gegenüber dem Produkt aus Vergleichsbeispiel II eine niedrigere Vortex-Zeit, d. h. ein schnelleres Absorptionsvermögen auf.

### Beispiel III

Es wurde analog zu Vergleichsbeispiel II vorgegangen, jedoch wurden nach der vollständigen Neutralisation dem Polymerisatgel 230 Teile superabsorbierende Feinkorn-Partikel, die mit 50 Teilen Tensid-haltigem Wasser zuvor angeteigt worden sind, zugesetzt. Art und Menge der eingesetzten Tenside können der Tabelle III entnommen werden. Nach dem anschließenden dreimaligen Durchwolfen des Geles sind im Gegensatz zu Vergleichsbeispiel II keine Feinkom-Agglomerate im Gel zu erkennen. Das so mechanisch zerkleinerte Gel wurde mit Heißluft bei 150 °C getrocknet. Das Polymer wird anschließend gemahlen und auf ein Kornspektrum von 0,150 - 0,800 mm abgesiebt.

**Tabelle III**

| **Versuch** | **Tensid** | **Teile** | **Retention** | **Vortex-Zeit** |
|---|---|---|---|---|
| 3 - 1 | SPAN®20 | 0,8 | 49 g/g | 28 s |
| 3 - 2 | Genapol ®2822 | 4,0 | 47 g/g | 32 s |
| 3 - 3 | Plantaren® 2 000 UPNP | 1,0 | 48 g/g | 30 s |
| 3 - 4 | Natriumlaurylsulfat | 1,2 | 49 g/g | 29 s |
| 3 - 5 | C₁₂-/C₁₄-Alkylbenzyldimethylammoniumchlorid | 6,4 | 47 g/g | 33 s |

Alle in dieser Versuchsserie hergestellten Produkte weisen gegenüber dem Produkt aus Vergleichsbeispiel II eine niedrigere Vortex-Zeit, d.h.ein schnelleres Absorptions-vermögen auf.

### Beispiel IV

Es wurde analog zu Vergleichsbeispiel II vorgegangen, jedoch wurden nach der vollständigen Neutralisation dem Polymerisatgel 230 Teile superabsorbierende Feinkorn-Partikel, die zuvor mit 25 Teilen Tensid-haltigem Wasser angeteigt worden sind, und gleichzeitig 20 Teile Tensid-haltiges Wasser zugesetzt. Art und Menge der jeweils eingesetzten Tenside können der Tabelle IV entnommen werden. Nach dem anschließenden dreimaligen Durchwolfen des Gels sind im Gegensatz zu Vergleichsbeispiel II kein Feinkorn-Agglomerate im Gel zu erkennen. Das so mechanisch zerkleinerte Gel wurde mit Heißluft bei 150 °C getrocknet. Das Polymer wird anschließend gemahlen und auf ein Komspektrum von 0,150 - 0,800 mm abgesiebt.

**Tabelle IV**

| **Versuch** | **Tensid** | **Teile** * | **Retention** | **Vortex-Zeit** |
|---|---|---|---|---|
| 4 - 1 | Tween ®80 | 2,3 | 50 g/g | 26 s |
| 4 - 2 | Genagen® CA-050 | 3,2 | 48 g/g | 28 s |
| 4 - 3 | Hostapur ®SAS 30 | 1,2 | 49 g/g | 24 s |
| 4 - 4 | Natriumsalz des Sulfobernsteinsäure-di-(2-ethylhexyl)esters | 1,8 | 49 g/g | 25 s |
| 4 - 5 | C₁₂-/C₁₄-Alkylbenzyldimethylammoniumchlorid | 5,5 | 48 g/g | 30 s |
| 4 - 6 | Ampholyt® JB 130/K | 4,0 | 48 g/g | 29 s |

| | | | | |
|---|---|---|---|---|
| * Die angegebenen Teile an Tensid wurden zur Hälfte dem für die Anteigung der superabsorbierenden Feinkorn-Partikel eingesetzten Wasser zugesetzt und zur anderen Hälfte dem Wasser, welches zusätzlich dem Polymerisatgel zugegeben wurde. | | | | |

Alle in dieser Versuchsserie hergestellten Produkte weisen gegenüber dem Produkt aus Vergleichsbeispiel II eine niedrigere Vortex-Zeit, d. h. ein schnelleres Absorptionsvermögen auf.

### Vergleichsbeispiel III

Es wurde ein superabsorbierendes Polymer gemäß Vergleichsbeispiel II hergestellt. Auf 100 Teile des gemahlenen und abgesiebten Polymers wurden 3 Teile Tensid-haltiges Wasser aufgesprüht und das Produkt wurde anschließend bei 120 °C für 1 Stunde im Trockenschrank getrocknet. Art und Menge der eingesetzten Tenside können der Tabelle V entnommen werden.

**Tabelle V**

| **Versuch** | **Tensid** | **Teile** | **Retention** | **Vortex-Zeit** |
|---|---|---|---|---|
| 5 - 1 | Tween ®80 | 2,3 | 46 g/g | 37 s |
| 5 - 2 | Genagen® CA-050 | 3,2 | 45 g/g | 39 s |
| 5 - 3 | Hostapur ®SAS 30 | 1,2 | 45 g/g | 38 s |
| 5 - 4 | Natriumsalz des Sulfobernsteinsäure-di-(2-ethylhexyl)esters | 1,8 | 44 g/g | 37 s |
| 5 - 5 | C₁₂-/C₁₄-Alkylbenzyldimethylammoniumchlorid | 5,5 | 44 g/g | 38 s |
| 5 - 6 | Ampholyt® JB 130/K | 4,0 | 45 g/g | 39 s |

Wie aus den Ergebnissen von Tabelle V ersichtlich ist, zeigen die mit Tensidhattigem Wasser behandelten Produkte keine Verbesserung der Daten für Retention und Vortex-Zeit im Vergleich zu dem nicht behandelten Produkt aus Vergleichsbeispiel II. Hierdurch ist belegt, daß die in den Beispielen II - IV gefundenen schnelleren Anquellgeschwindigkeiten der Produkte nicht auf einer durch den Tensid-Zusatz bewirkten besseren Benetzbarkeit der Polymer-Partikel beruhen, sondern auf der gleichmäßigeren Einmischung der superabsorbierenden Feinkorn-Partikel in die Polymerisatgele.

## Patentansprüche

1. Verfahren zur Herstellung hydrophiler, hochquellfähiger Hydrogele durch Einmischen von Feinpartikeln eines hydrophilen, hochquellfähigen Hydrogels in ein hydrophiles, hochquellfähiges Hydrogel in wäßriger Gelform unter Zugabe von Wasser, **dadurch gekennzeichnet, daß** das Einmischen in Gegenwart eines Tensides erfolgt.

2. Verfahren nach Anspruch 1, **dadurch gekennzeichnet, daß** die Feinpartikel eine Teilchengröße von kleiner 0,1 mm, besonders bevorzugt kleiner 0,15 mm haben.

3. Verfahren nach Anspruch 1 und/oder 2, **dadurch gekennzeichnet, daß** das Hydrogel in wäßriger Gelform einen Feststoffgehalt von 15 bis 50 Gew.-%, besonders bevorzugt von 15 bis 30 Gew.-%, aufweist.

4. Verfahren nach einem oder mehreren der Ansprüche 1 bis 3, **dadurch gekennzeichnet, daß** Feinkornpartikel und Hydrogel in wäßriger Gelform die gleiche chemische Zusammensetzung aufweisen.

5. Verfahren nach einem oder mehreren der Ansprüche 1 bis 4, **dadurch gekennzeichnet, daß** Tenside mit einem HLB-Wert von größer gleich drei verwendet werden.

6. Verfahren nach einem oder mehreren der Ansprüche 1 bis 5, **dadurch gekennzeichnet, daß** nichtionische oder anionische Tenside verwendet werden.

7. Verfahren nach einem oder mehreren der Ansprüche 1 bis 6, **dadurch gekennzeichnet, daß** die Tenside in Mengen von 0,01 bis 0,2 Teilen, besonders bevorzugt 0,015 bis 0,15 Teilen pro 100 Teile des hydrophilen, hochquellfähigen Hydrogels in wäßriger Gelform, verwendet werden.

8. Verfahren nach einem oder mehreren der Ansprüche 1 bis 7, **dadurch gekennzeichnet, daß** hydrophile, hochquellfähige Hydrogele Polymere aus (co)poly-merisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispiels-weise Guarderivate sind.

9. Verfahren nach Anspruch 8, **dadurch gekennzeichnet, daß** hydrophile Monomere Verbindungen der allgemeinen Formel I 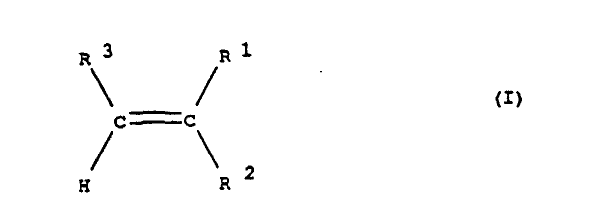 worin
R¹ Wasserstoff, Methyl oder Ethyl,
R² die Gruppe -COOR⁴, die Sulfonylgruppe, die Phosphonylgruppe, die mit (C₁₋C₄)-Alkanol veresterte Phosphonylgruppe oder eine Gruppe der Formel 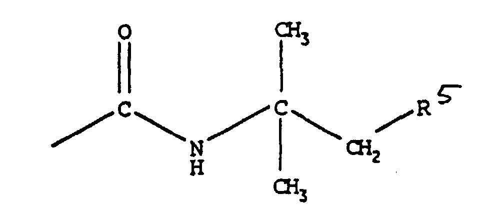
R³ Wasserstoff, Methyl, Ethyl oder die Carboxylgruppe,
R⁴ Wasserstoff, Amino oder Hydroxy-(C₁-C₄)-Alkyl und
R⁵ die Sulfonylgruppe, die Phosphonylgruppe oder die Carboxylgruppe bedeuten, sind.

10. Verfahren nach Anspruch 8 und/oder 9, **dadurch gekennzeichnet, daß** hydrophile Monomere Acrylsäure oder Methacrylsäure sind.

## Claims

1. Aprocessforpreparing hydrophilic highly swellable hydrogels by mixing fine particles of a hydrophilic highly swellable hydrogel into a hydrophilic highly swellable hydrogel in aqueous gel form with the addition of water, wherein the mixing-in operation is carried out in the presence of a surfactant.

2. The process as claimed in claim 1, wherein the fine particles have a size of less than 0.1 mm, particularly preferably less than 0.15 mm.

3. The process as claimed in claim 1 and/or 2, wherein the hydrogel in aqueous gel form has a solids content of from 15 to 50% by weight, particularly preferably from 15 to 30% by weight.

4. The process as claimed in one or more of claims 1 to 3, wherein fine-grain particles and hydrogel in aqueous gel form have the same chemical composition.

5. The process as claimed in one or more of claims 1 to 4, wherein surfactants having a HLB value of greater than or equal to three are used.

6. The process as claimed in one or more of claims 1 to 5, wherein nonionic or anionic surfactants are used.

7. The process as claimed in one or more of claims 1 to 6, wherein the surfactants are used in amounts of from 0.01 to 0.2 part, particularly preferably from 0.015 to 0.15 part, per 100 parts of the hydrophilic highly swellable hydrogel in aqueous gel form.

8. The process as claimed in one or more of claims 1 to 7, wherein hydrophilic highlyswellable hydrogelsare polymers comprising (co)polymerized hydrophilic monomers, graft (co)polymers of one or more hydrophilic monomers on an appropriate graft base, crosslinked cellulose ethers or starch ethers, or natural products, for example guar derivatives, which can be swollen in aqueous liquids.

9. The process as claimed in claim 8, wherein hydrophilic monomers are compounds of the formula I 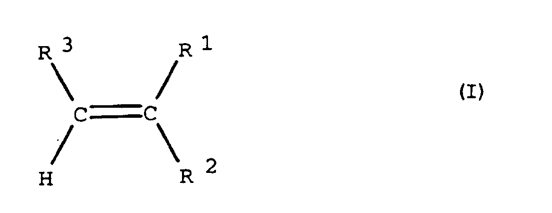 in which
R¹ is hydrogen, methyl or ethyl,
R² is the group -COOR⁴, sulfonyl, phosphonyl, phosphonyl esterified with (C₁-C₄)-alkanol, or a group of the formula 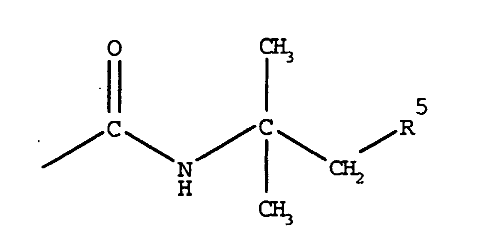
R³ is hydrogen, methyl, ethyl or carboxyl,
R⁴ is hydrogen, amino or hydroxy-(C₁-C₄)-alkyl, and
R⁵ is sulfonyl, phosphonyl or carboxyl.

10. The process as claimed in claim 8 and/or 9, wherein hydrophilic monomers are acrylic acid or methacrylic acid.

## Revendications

1. Procédé de préparation d'hydrogels hydrophiles, à haute capacité de gonflement, par incorporation de particules fines d'un hydrogel hydrophile à haute capacité de gonflement dans un hydrogel hydrophile, à haute capacité de gonflement, sous forme de gel aqueux, avec addition d'eau, **caractérisé en ce que** l'incorporation a lieu en présence d'un agent tensioactif.

2. Procédé suivant la revendication 1, **caractérisé en ce que** les particules fines ont une taille de particule inférieure à 0,1 mm, particulièrement avantageusement inférieure à 0,15 mm.

3. Procédé suivant l'une des revendications 1 et 2, **caractérisé en ce que** l'hydrogel sous forme de gel aqueux présente une teneur en matière solide de 15 à 50% en poids, particulièrement avantageusement de 15 à 30% en poids.

4. Procédé suivant une ou plusieurs des revendications 1 à 3, **caractérisé en ce que** les particules fines et l'hydrogel sous forme de gel aqueux présentent la même composition chimique.

5. Procédé suivant une ou plusieurs des revendications 1 à 4, **caractérisé en ce que** les agents tensioactifs sont utilisés avec une valeur HLB supérieure à trois.

6. Procédé suivant une ou plusieurs des revendications 1 à 5, **caractérisé en ce qu'**on utilise des agents tensioactifs non ionogènes ou anioniques.

7. Procédé suivant une ou plusieurs des revendications 1 à 6, **caractérisé en ce que** les agents tensioactifs sont utilisés en des quantités de 0,01 à 0,2 partie, particulièrement avantageusement de 0,015 à 0,15 partie, pour 100 parties de l'hydrogel hydrophile, à haute capacité de gonflement, sous forme de gel aqueux.

8. Procédé suivant une ou plusieurs des revendications 1 à 7, **caractérisé en ce que** les hydrogels hydrophiles, à haute capacité de gonflement, sont des polymères à base de monomères hydrophiles (co)polymérisés, des (co)polymères de greffage d'un ou de plusieurs monomères hydrophiles sur une base de greffage appropriée, des éthers de cellulose ou d'amidon réticulés ou des produits naturels gonflables dans des liquides aqueux, comme par exemple des dérivés de guar.

9. Procédé suivant la revendication 8, **caractérisé en ce que** les monomères hydrophiles sont des composés de la formule générale I : 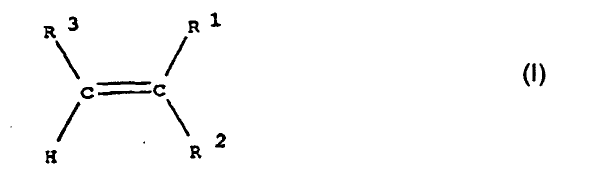 dans laquelle
R¹ représente de l'hydrogène, du méthyle ou de l'éthyle,
R² représente le groupe -COOR⁴, le groupe sulfonyle, le groupe phosphonyle, le groupe phosphonyle estérifié par un alcanol en C₁-C₄ ou un groupe de la formule : 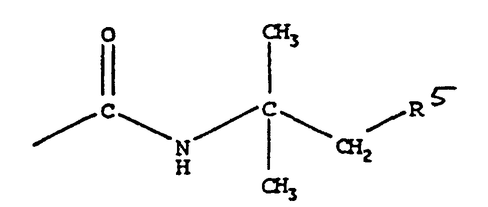
R³ représente de l'hydrogène, du méthyle, de l'éthyle ou le groupe carboxyle,
R⁴ représente de l'hydrogène, un groupe amino ou un groupe hydroxy-alkyle en C₁-C₄, et
R⁵ représente le groupe sulfonyle, le groupe phosphonyle ou le groupe carboxyle.

10. Procédé suivant l'une des revendications 8 et 9, **caractérisé en ce que** les monomères hydrophiles sont de l'acide acrylique ou de l'acide méthacrylique.
